(19) **Europäisches Patentamt / European Patent Office / Office européen des brevets**

(11) **EP 1 764 159 B1**

(12) **EUROPÄISCHE PATENTSCHRIFT**

(45) Veröffentlichungstag und Bekanntmachung des Hinweises auf die Patenterteilung:
**29.07.2009 Patentblatt 2009/31**

(51) Int Cl.:
***B05B 12/08*** (2006.01)     ***G05D 7/06*** (2006.01)

(21) Anmeldenummer: **06017809.2**

(22) Anmeldetag: **25.08.2006**

(54) **Beschichtungsanlage und zugehöriges Beschichtungsverfahren**

Coating device and method

Dispositif et procédé de revêtement

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.09.2005 DE 102005042336**

(43) Veröffentlichungstag der Anmeldung:
**21.03.2007 Patentblatt 2007/12**

(73) Patentinhaber: **Dürr Systems GmbH**
**70435 Stuttgart (DE)**

(72) Erfinder:
• **Collmer, Andreas**
**71665 Vaihingen/Enz (DE)**

• **Hofmann, Wilhelm**
**61138 Niederdorfelden (DE)**

(74) Vertreter: **Beier, Ralph**
**v. Bezold & Partner**
**Patentanwälte**
**Akademiestrasse 7**
**80799 München (DE)**

(56) Entgegenhaltungen:
EP-A2- 1 481 736     WO-A-98/35761
DE-T2- 69 814 532     JP-A- 9 029 147
JP-A- 63 111 963

## Beschreibung

Die Erfindung betrifft eine Beschichtungsanlage zur Beschichtung von Bauteilen mit einem Beschichtungsmittel, insbesondere eine Lackieranlage zur Lackierung von Kraftfahrzeugkarosserieteilen sowie ein zugehöriges Betriebsverfahren gemäß den nebengeordneten Ansprüchen.

Aus EP 1 287 900 A2 und aus "Technisches Handbuch Farbmengenregelung", Seite 32 (1994) der Fa. DÜRR ist eine derartige Beschichtungsanlage bekannt, in der über einen Farbdruckregler und eine Dosierpumpe ein Rotationszerstäuber mit dem zu applizierenden Beschichtungsmittel versorgt wird. Dabei wird durch Drucksensoren der Beschichtungsmitteldruck vor und hinter der Dosierpumpe gemessen und einer Regelelektronik zugeführt, die den Farbdruckregler über ein als Proportionalventil ausgebildetes Druckregelventil ansteuert. Bei dieser bekannten Beschichtungsanlage wird als Regelgröße entweder der Ausgangsdruck des Farbdruckreglers oder die Farbdurchflussmenge geregelt.

Nachteilig an der vorstehend beschriebenen bekannten Beschichtungsanlage ist jedoch der Bauteilverschleiß der Dosierpumpe und des Farbdruckreglers, was zu einer geringen Standzeit dieser Bauteile führt. Dies gilt insbesondere für den Farbdruckregler, dessen Dichtring nach einer gewissen Betriebsdauer sehr starke Auswaschungen aufweist.

Darüber hinaus können bei den herkömmlichen Beschichtungsanlagen Dosierungenauigkeiten auftreten, die im Extremfall zu einem Lackstromabriss führen, was sich auf den zu beschichtenden Bauteilen als Beschichtungsfehler äußert.

Aus DE 698 14 532 T2 ist eine Beschichtungsanlage bekannt, bei der die Druckdifferenz über der Dosierpumpe durch Druckregulierungsmittel minimiert wird, um die störenden Auswirkungen eines Lecks in der Dosierpumpe zu minimieren. Auch diese Beschichtungsanlage weist jedoch die vorstehend beschriebenen Nachteile auf.

Eine weitere Beschichtungsanlage ist aus WO 2005/072881 A1 bekannt. Bei dieser Beschichtungsanlage wird jedoch der Ausgangsdruck der Dosierpumpe auf einen vorgegebenen Sollwert eingeregelt. Diese Beschichtungsanlage weist deshalb ebenfalls die vorstehend beschriebenen Nachteile auf.

Aus US 3 584 977 ist eine Dosiereinrichtung bekannt, die eingesetzt wird, um bei der Nylonherstellung dem in einer Rohrleitung fließenden flüssigen Nylon ein Antistatikmittel beizumischen. Diese Dosiereinrichtung eignet sich also nicht zum Einsatz in einer Beschichtungsanlage. Darüber hinaus wird die Dosierpumpe hierbei nicht von einem vorgeschalteten Druckregler mit einem bestimmten Eingangsdruck versorgt, sondern durch eine vorgeschaltete weitere Dosierpumpe.

Ferner sind aus EP 0 697 317 B1 und EP 1 437 520 A2 Verfahren zur Steuerung eines Bremsdrucks in einem Kraftfahrzeugs bzw. zum Steuern einer automatischen Kupplung bekannt.

Aus JP 63 111 963 A ist eine Beschichtungsanlage bekannt, bei der die Druckdifferenz über der Dosierpumpe konstant gehalten wird. Hierzu wird der Beschichtungsmitteldruck am Ausgang der Dosierpumpe gemessen und der Farbdruckregler am Eingang der Dosierpumpe in Abhängigkeit von dem stromabwärts gemessenen Beschichtungsmitteldruck so angesteuert, dass die Druckdifferenz über der Dosierpumpe konstant bleibt. Nachteilig an dieser Beschichtungsanlage ist jedoch die Tatsache, dass das Steuerverhalten hierbei auf einen bestimmten Farbdruckregler und auf ein bestimmtes Beschichtungsmittel ausgelegt sein muss, damit der Differenzdruck über der Dosierpumpe konstant gehalten wird. Ein Austausch des Farbdruckreglers oder die Verwendung eines anderen Beschichtungsmittels führen deshalb dazu, dass der Differenzdruck über der Dosierpumpe nicht mehr konstant bleibt.

Ferner ist aus JP 09 029 147 A eine Beschichtungsanlage bekannt, bei der die Soll-Ist-Abweichung des Beschichtungsmitteldrucks am Ausgang der Dosierpumpe minimiert wird. Aus dieser Druckschrift ist jedoch nicht entnehmbar, dass die Druckdifferenz über der Dosierpumpe konstant gehalten werden soll. Diese bekannte Beschichtungsanlage weist deshalb ebenfalls die eingangs beschriebenen Nachteile auf.

Der Erfindung liegt deshalb die Aufgabe zugrunde, die eingangs beschriebene bekannte Beschichtungsanlage entsprechend zu verbessern.

Diese Aufgabe wird durch eine Beschichtungsanlage und ein zugehöriges Betriebsverfahren gemäß den nebengeordneten Ansprüchen gelöst.

Die Erfindung beruht auf der technischen Erkenntnis, dass die Bauteilbelastung der Dosierpumpe und des Farbdruckreglers bei der eingangs beschriebenen bekannten Beschichtungsanlage dadurch verursacht wird, dass die über der Dosierpumpe abfallende Druckdifferenz während des Beschichtungsbetriebs stark schwankt. Dies führt bei einer großen positiven Druckdifferenz (d.h. der Druck vor der Dosierpumpe ist größer als der Druck hinter der Dosierpumpe) zu einer höheren Ausflussrate bei kleinen Volumenstromänderungen (sogenannten "Brushes") als erwünscht, was durch einen Pumpenschlupf verursacht wird. Bei einer negativen Druckdifferenz (d.h. der Druck vor der Dosierpumpe ist kleiner als der Druck hinter der Dosierpumpe) führen die Schwankungen der Druckdifferenz dagegen zu einer Unterversorgung des benötigten Lackvolumens, was im schlimmsten Fall die störenden Lackstromabrisse verursacht. Darüber hinaus tragen die Schwankungen der Druckdifferenz über der Dosierpumpe auch zu der unerwünschten mechanischen Belastung der Dosierpumpe und des Farbdruckreglers bei.

Die Druckdifferenz über der Dosierpumpe und damit die störenden Dosierungenauigkeiten und mechanischen Belastungen werden jedoch nicht nur durch die schwankende Menge des abgegebenen Beschichtungsmittels beeinflusst. Vielmehr ändert sich die Druckdifferenz auch bei einem Wechsel zu einem Beschichtungsmittel mit einer anderen Viskosität oder bei einem Einbau eines anderen Farbdruckreglers mit einem anderen Druckübersetzungsverhältnis.

Die Erfindung umfasst deshalb die allgemeine technische Lehre, den Differenzdruck über der Dosierpumpe im Beschichtungsbetrieb unabhängig von der abgegebenen Beschichtungsmittelmenge, der Viskosität des Beschichtungsmittels und/oder dem Druckübersetzungsverhältnis des eingesetzten Farbdruckreglers möglichst konstant zu halten, um die vorstehend beschriebenen negativen Auswirkungen auf die Dosiergenauigkeit und die Standzeit der eingesetzten Bauteile zu vermeiden.

Die erfindungsgemäße Beschichtungsanlage weist deshalb eine Steuereinheit auf, die den Druckregler ansteuert und als Steuergröße die Druckdifferenz über der Dosierpumpe unabhängig von der Fördermenge der Dosierpumpe auf einen im Wesentlichen konstanten Soll-Wert einstellt. Bei der Erfindung ist also die Druckdifferenz über der Dosierpumpe die Steuergröße, wohingegen bei dem eingangs beschriebenen Stand der Technik der Ausgangsdruck des Druckreglers bzw. die Farbdurchflussmenge geregelt wurden.

Erfindungsgemäß erfolgt die Konstanthaltung des Differenzdrucks über der Dosierpumpe durch eine Steuereinheit, d.h. ohne eine Messung und Rückkopplung des Ist-Wertes der Druckdifferenz. Vorteilhaft an einer Steuerung der Druckdifferenz im Gegensatz zu einer Regelung der Druckdifferenz ist die fehlende Schwingungsneigung, die einfache technische Realisierung, die schnelle Reaktion auf Drucksprünge und Farbmengenänderungen und die Ermöglichung einer Kompensation der Totzeit des Proportionalventils.

In dem bevorzugten Ausführungsbeispiel der Erfindung wird jedoch zur Konstanthaltung der Druckdifferenz über der Dosierpumpe eine sogenannte Parameter-Steuerung eingesetzt, d.h. keine Regelung, so dass der Ist-Wert der Druckdifferenz über der Dosierpumpe nicht gemessen werden muss.

Hierzu ist in dem bevorzugten Ausführungsbeispiel der Erfindung ein erster Drucksensor vorgesehen, der den Beschichtungsmitteldruck stromabwärts hinter der Dosierpumpe, d.h. am Ausgang der Dosierpumpe misst. Der gemessene Beschichtungsmitteldruck am Ausgang der Dosierpumpe wird dann der Steuereinheit zugeführt, die den Druckregler in Abhängigkeit von dem stromabwärts hinter der Dosierpumpe gemessenen Beschichtungsmitteldruck entsprechend einem vorgegebenen Steuerverhalten so ansteuert, dass die Druckdifferenz über der Dosierpumpe den vorgegebenen Soll-Wert annimmt und konstant hält.

Die Ansteuerung des Druckreglers durch die Steuereinheit erfolgt in dem bevorzugten Ausführungsbeispiel der Erfindung mittelbar über ein zwischengeschaltetes Proportionalventil, was an sich aus dem eingangs erwähnten Stand der Technik bekannt ist. Das Proportionalventil wird hierbei von der Steuereinheit elektrisch angesteuert und steuert seinerseits den Farbdruckregler pneumatisch an.

Vorzugsweise ist das Steuerverhalten der Steuereinheit hierbei durch eine im Wesentlichen lineare Steuerkennlinie vorgegeben, wobei die Steuerkennlinie den Zusammenhang zwischen dem am Ausgang der Dosierpumpe gemessenen Druck und der daraus resultierenden Ansteuergröße für den Druckregler bzw. das zwischengeschaltete Proportionalventil definiert. Die lineare Steuerkennlinie weist hierbei einen vorgegebenen Achsenabschnittswert und eine vorgegebene Steigung auf, wobei der Achsenabschnittswert vorzugsweise in Abhängigkeit von dem gewünschten Soll-Wert der Druckdifferenz über der Dosierpumpe und dem tatsächlichen Druckübersetzungsverhältnis des Systems aus dem Proportionalventil und dem Farbdruckregler festgelegt wird, während die Steigung der Steuerkennlinie vorzugsweise in Abhängigkeit von dem Übersetzungsverhältnis des Systems aus dem Proportionalventil und dem Druckregler vorgegeben wird. Für die Steuerkennlinie gilt also vorzugsweise:

$$kd = k1 + k2 \cdot p_H$$

mit

kd: Ansteuerungsgröße zur Ansteuerung des Proportionalventils
$P_H$: gemessener Druck hinter der Dosierpumpe
k1: Achsenabschnittswert der Steuerkennlinie
k2: Steigung der Steuerkennlinie.

Die Steuerparameter k1 und k2 der Steuerkennlinie sind hierbei wie folgt eingestellt, um die gewünschte Druckdifferenz über der Dosierpumpe einzustellen:

$$k1 = \frac{\Delta p_{Soll}}{\eta}$$

$$k2 = \frac{1}{\eta}$$

mit

$\Delta p_{Soll}$:     Soll-Wert der Druckdifferenz über der Dosierpumpe,

$\eta$:     Übersetzungsverhältnis des Systems aus dem Druckregler und der vorgeschalteten Proportionalventil.

Bei einer Einstellung der Steuerparameter k1, k2 auf die vorstehend genannten Werte stellt sich unabhängig von der Fördermenge die gewünschte Druckdifferenz über der Dosierpumpe ein, wie sich aus folgender Formel ergibt:

$$\begin{aligned}
\Delta p &= p_V - p_H \\
&= \eta \cdot kd - p_H \\
&= \eta \cdot (k1 + k2 \cdot p_H) - p_H \\
&= \eta \cdot k1 + (\eta \cdot k2 - 1) \cdot p_H \\
&= \Delta p_{Soll}
\end{aligned}$$

Die exakte Einstellung der optimalen Steuerparameter K1, K2 setzt jedoch die Kenntnis des Übersetzungs-verhältnisses $\eta$ des Systems aus dem Proportionalventil und dem Druckregler voraus. Bei einem Austausch des Druckreglers oder bei einem Wechsel zu einem Beschichtungsmittel mit einer anderen Viskosität ist das Übersetzungsver-hältnis $\eta$ jedoch nicht bekannt, so dass die Steuerparameter k1, k2 bestimmt werden müssen. Vorzugsweise erfolgt die Bestimmung der Steuerparameter k1 und k2 im Rahmen einer Adaption, wobei auch der Beschichtungsmitteldruck stromaufwärts vor der Dosierpumpe gemessen und ausgewertet wird. Die Adaption des Steuerverhaltens erfolgt dann durch eine Adaptionseinheit, die eingangsseitig mit den beiden Drucksensoren verbunden ist und das Steuerverhalten der Steuereinheit in Abhängigkeit von dem gemessenen Beschichtungsmitteldruck stromaufwärts vor der Dosierpumpe und dem gemessenen Beschichtungsmitteldruck stromabwärts hinter der Dosierpumpe adaptiert.

Vorzugsweise erfolgt die Adaption des Steuerverhaltens der Steuereinheit iterativ und/oder rekursiv. Eine iterative Adaption des Steuerverhaltens bedeutet, dass das Steuerverhalten nacheinander in mehreren Schritten dem optimalen Steuerverhalten angenähert wird, das erforderlich ist, um die Druckdifferenz über der Dosierpumpe konstant zu halten. Eine rekursive Adaption in dem erfindungsgemäßen Sinne bedeutet, dass aus dem aktuellen Steuerverhalten der Steuereinheit jeweils ein verbessertes Steuerverhalten berechnet wird.

Die Adaption des Steuerverhaltens der Steuereinheit kann während des normalen Beschichtungsbetriebs oder in separaten Adaptionsphasen erfolgen. Darüber hinaus kann die Adaption während des normalen Beschichtungsbetriebs laufend oder in bestimmten Zeitabständen erfolgen.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

Figur 1     eine schematische Darstellung einer erfindungsgemäßen Beschichtungsanlage sowie

Figur 2     das erfindungsgemäße Adaptionsverfahren zur Anpassung des Steuerverhaltens in Form eines Flussdiagramms.

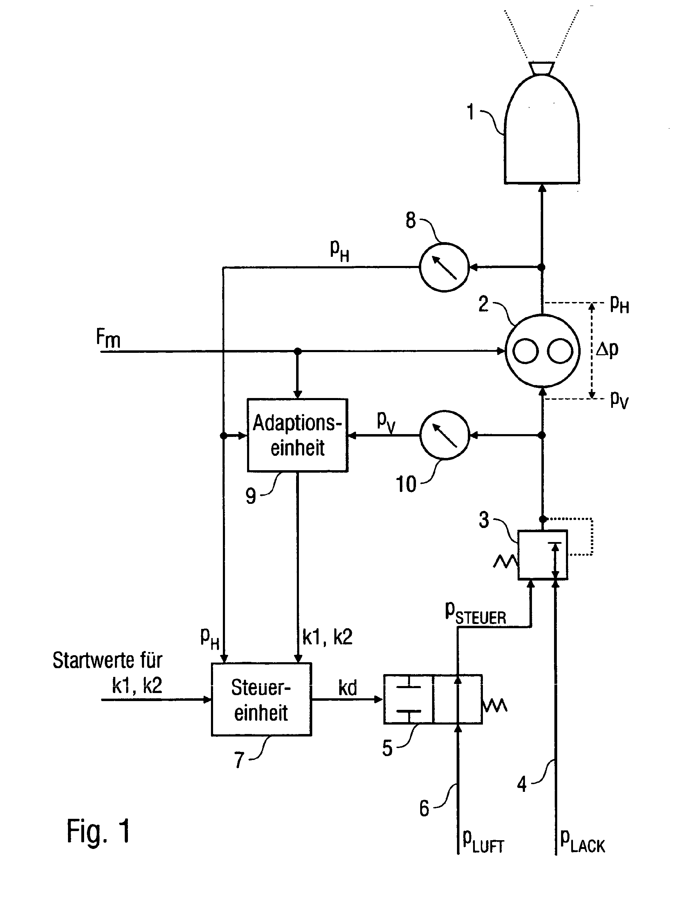

Die in Figur 1 schematisch dargestellte erfindungsgemäße Beschichtungsanlage stimmt teilweise mit dem eingangs beschriebenen Stand der Technik gemäß EP 1 287 900 A2 überein und weist einen herkömmlichen Zerstäuber 1 auf, der über eine volumetrisch arbeitende Dosierpumpe 2 mit Lack versorgt wird, wobei die Dosierpumpe 2 über einen Farbdruckregler 3 an eine Farbleitung 4 angeschlossen ist, die einen Farbdruck $P_{Lack} \approx 8$ bar bereit stellt.

Der Farbdruckregler 3 kann in herkömmlicher Weise ausgebildet sein, was beispielsweise in EP 1 376 289 A1 beschrieben ist, so dass der Inhalt dieser Druckschrift der vorliegenden Beschreibung in vollem Umfang zuzurechnen ist.

Im Betrieb regelt der Farbdruckregler 3 am Eingang der Dosierpumpe 2 einen Farbdruck $p_V$ in Abhängigkeit von einem Steuerdruck $p_{STEUER}$, der dem Farbdruckregler 3 durch ein Proportionalventil 5 zugeführt wird, wobei das Proportionalventil 5 an eine Steuerluftleitung 6 angeschlossen ist, die einen Steuerluftdruck $p_{LUFT} \approx 10$ bar bereit stellt.

Das Proportionalventil 5 wird von einer Steuereinheit 7 mit einem elektrischen Steuersignal kd angesteuert, wobei das System aus dem Proportionalventil 5 und dem Farbdruckregler 3 ein Übersetzungsverhältnis $\eta = p_V/kd$ aufweist, d.h. bei einer Ansteuerung des Proportionalventils 5 mit dem elektrischen Steuersignal kd stellt sich am Ausgang des Farbdruckreglers 3 ein Beschichtungsmitteldruck $p_V = kd \cdot \eta$ ein.

Bei der Ansteuerung des Proportionalventils 5 berücksichtigt die Steuereinheit den Beschichtungsmitteldruck $p_H$ am Ausgang der Dosierpumpe 2, wobei der Druck $p_H$ von einem Drucksensor 8 gemessen wird. Die Ansteuerung des Proportionalventils 5 durch die Steuereinheit 7 erfolgt dann entsprechend der folgenden linearen Steuerkennlinie:

$$kd = k1 + k2 \cdot p_H$$

Die Steuerparameter k1 und k2 werden dabei wie folgt eingestellt:

$$k1 = \frac{\Delta p_{Soll}}{\eta}$$

$$k2 = \frac{1}{\eta}$$

Bei einer solchen optimalen Einstellung der Steuerparameter k1, k2 stellt sich dann über der Dosierpumpe 2 die gewünschte Druckdifferenz $\Delta p_{Soll}$ ein, wie aus folgender Herleitung deutlich wird:

$$\begin{aligned}
\Delta p &= p_V - p_H \\
&= \eta \cdot kd - p_H \\
&= \eta \cdot (k1 + k2 \cdot p_H) - p_H \\
&= \eta \cdot k1 + (\eta \cdot k2 - 1) \cdot p_H \\
&= \Delta p_{Soll}
\end{aligned}$$

Die Ermittlung der optimalen Werte der Steuerparameter k1 und k2 setzt jedoch die Kenntnis des Übersetzungsverhältnisses $\eta$ des Systems aus dem Proportionalventil 5 und dem Farbdruckregler 3. Nach einem Austausch des Farbdruckreglers 3 durch einen anderen Farbdruckregler mit einem anderen Druckübersetzungsverhältnis müssen die Steuerparameter k1, k2 deshalb an das veränderte Druckübersetzungsverhältnis des Farbdruckreglers 3 angepasst werden. Auch bei einem Wechsel des eingesetzten Beschichtungsmittels und einer dadurch bedingten Veränderung der Viskosität des Beschichtungsmittels ändert sich das Übersetzungsverhältnis $\eta$, was ebenfalls eine Anpassung der Steuerparameter k1, k2 erforderlich macht.

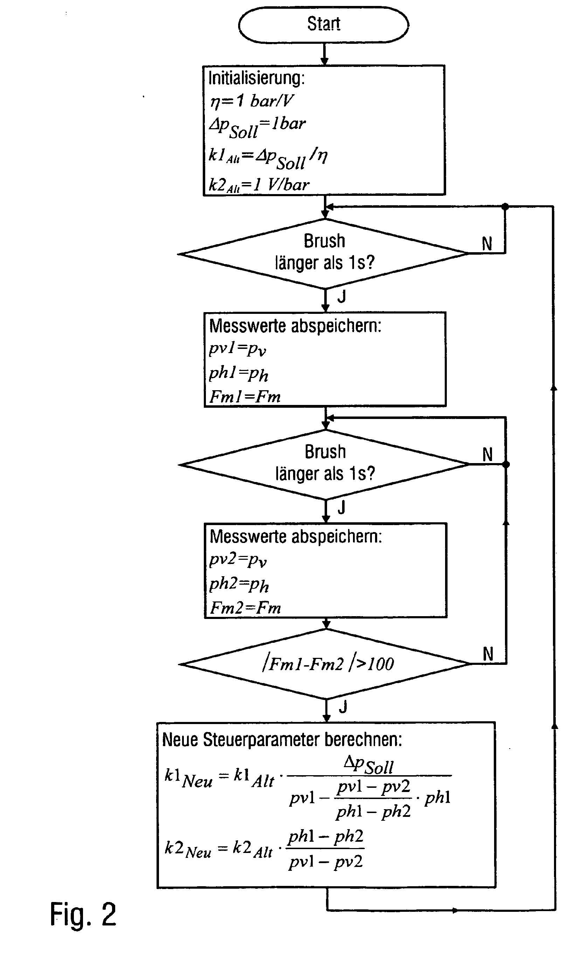

Die erfindungsgemäße Beschichtungsanlage weist deshalb eine Adaptionseinheit 9 auf, die mit dem Drucksensor 8 verbunden ist und darüber hinaus über einen weiteren Drucksensor 10 den Beschichtungsmitteldruck $p_V$ vor der Dosierpumpe 2 misst. Die Adaptionseinheit 9 adaptiert dann die Steuerparameter k1, k2 im Rahmen eines Adaptionsverfahrens, das in Figur 2 in Form eines Flussdiagramms dargestellt ist und nachfolgend beschrieben wird.

Bei der erstmaligen Adaption der Steuerparameter werden zunächst die Werte für das Übersetzungsverhältnis $\eta$, den Soll-Wert $\Delta p_{soll}$ für die Druckdifferenz über der Dosierpumpe 2 und die Startwerte $k1_{Alt}$ und $k2_{Alt}$ für die Steuerparameter k1 und k2 initialisiert, wobei die Vorgaben auf Vermutungen über das Übersetzungsverhältnis $\eta$ beruhen.

Anschließend wird ein sogenannter Brush abgewartet, der länger als eine Sekunde dauert. Dabei handelt es sich um eine Volumenstromänderung in dem abgegebenen Beschichtungsmittelstrom, der auf einer Öffnung der Hauptnadel des Zerstäubers 1 beruht. Die Berücksichtigung nur relativ lang andauernder Brushes mit einer Zeitdauer von mehr als 1 Sekunde ist sinnvoll, da die Zeitdauer kürzerer Brushes nicht ausreicht, um Einschwingvorgänge abklingen zu lassen.

Anschließend misst die Adaptionseinheit 9 über die beiden Drucksensoren 8, 10 den Druck $p_{V1}$ vor der Dosierpumpe 2 und den Druck $p_{H1}$ hinter der Dosierpumpe 2. Darüber hinaus erfasst die Adaptionseinheit in diesem ersten Betriebspunkt auch die Farbmenge $F_{m1}$. Die Werte $p_{V1}$, $p_{V2}$, und $F_{m1}$ stehen hierbei in der Steuerung ohnehin zur Verfügung und müssen deshalb nicht zusätzlich gemessen werden.

Anschließend wird der nächste Brush abgewartet, der länger als eine Sekunde dauert und deshalb nicht mehr von Einschwingvorgängen betroffen ist.

In diesem zweiten Betriebspunkt werden dann wieder die Werte $P_{V2}$, $P_{H2}$ und $F_{m2}$ für den Druck $p_V$ vor der Dosierpumpe 2, den Druck $p_H$ hinter der Dosierpumpe 2 und die Farbmenge $F_m$ aus der Steuerung ausgelesen und abgespeichert. Auch hierbei kann also ausgenutzt werden, dass die Werte $p_{V2}$, $p_{H2}$ und $F_{m2}$ ohnehin zur Verfügung stehen und deshalb nicht zusätzlich gemessen werden müssen.

Dann wird geprüft, ob die beiden Betriebspunkte hinreichend weit voneinander entfernt sind, um eine aussagekräftige Messung zu ermöglichen. Hierzu wird der Absolutwert der Differenz $F_{m1}$-$F_{m2}$ der gemessenen Farbmengen in den beiden zur Adaption herangezogenen Betriebspunkte gebildet und mit einem Minimalwert verglichen. Falls der so gebildete Abstand zwischen den beiden Betriebspunkten zu klein ist, wird der zweite Betriebspunkt verworfen.

Andernfalls werden dann aus den bisherigen Werten $k1_{Alt}$, $k2_{Alt}$ der Steuerparameter optimierte Werte $k1_{NEU}$, $k2_{NEU}$ nach folgenden Formeln berechnet:

$$k2_{Neu} = k2_{Alt} \cdot \frac{p_{H1} - p_{H2}}{p_{V1} - p_{V2}}$$

$$k1_{Neu} = k1_{Alt} \frac{\Delta p_{SOLL}}{p_{V1} - \frac{p_{V1} - p_{V2}}{p_{H1} - p_{H2}} \cdot p_{H1}}$$

Anschließend arbeitet die Steuereinheit 7 dann mit den optimierten Werten $k1_{NEU}$ und $k2_{NEU}$ der Steuerparameter, wobei die in Figur 2 dargestellte Adaption der Steuerparameter k1, k2 während des Beschichtungsbetriebs laufend wiederholt wird, um das Steuerverhalten der Steuereinheit 7 zu optimieren und zu erreichen, dass die Druckdifferenz $\Delta p$ über der Dosierpumpe 2 den vorgegebenen Soll-Wert $\Delta p_{Soll}$ möglichst genau einhält.

Die vorstehend genannten Formeln zur Adaption der Steuerparameter k1, k2 ergeben sich aus der folgenden mathematischphysikalischen Herleitung.

Zunächst wird das Verhalten der Beschichtungsanlage durch folgende Gleichungen beschrieben:

$$kd = k1 + k2 \cdot p_H \qquad\qquad (1)$$

$$p_V = kd \cdot \eta \qquad\qquad (2)$$

$$\Delta p = p_V - p_H \qquad\qquad (3)$$

mit

kd:        Ansteuerungsgröße zur Ansteuerung des Proportionalventils 5,
$p_V$        gemessener Druck vor der Dosierpumpe 2,
$p_H$:        gemessener Druck hinter der Dosierpumpe 2,
k1:        Achsenabschnittswert der Steuerkennlinie,
k2:        Steigung der Steuerkennlinie,
$\Delta p_{soll}$:        Soll-Wert der Druckdifferenz über der Dosierpumpe 2,
$\Delta p$:        Ist-Wert der Druckdifferenz über der Dosierpumpe 2,
$\eta$:        Übersetzungsverhältnis des Systems aus dem Druckregler 3 und der vorgeschalteten Proportionalventil 5.

Aus den Gleichungen (1) und (2) folgt:

$$p_V = (k1 + k2 \cdot p_H) \cdot \eta \qquad (4)$$

Betrachtet man nun zwei Betriebspunkte mit unterschiedlichen Farbmengen $F_{m1}$, $F_{m2}$ und verschiedenen Beschichtungsmitteldrücken $p_{V1}$, $p_{V2}$, $p_{H1}$ und $p_{H2}$ vor bzw. hinter der Dosierpumpe, so gilt gemäß Gleichung (4) für diese beiden Betriebspunkte jeweils:

$$p_{V1} = (k1 + k2 \cdot p_{H1}) \cdot \eta \qquad (5)$$

$$p_{V2} = (k1 + k2 \cdot p_{H2}) \cdot \eta \qquad (6)$$

Aus den Gleichungen (5) und (6) folgt dann für den Steuerparameter k2:

$$k2 = \frac{p_{V1} - p_{V2}}{\eta \cdot (p_{H1} - p_{H2})} \qquad (7)$$

Für den alten, nicht optimierten Wert $k2_{Alt}$ des Steuerparameters k2 gilt dann unmittelbar:

$$k2_{Alt} = \frac{p_{V1} - p_{V2}}{\eta \cdot (p_{H1} - p_{H2})} \qquad (8)$$

Für den neuen, optimierten Wert $k2_{Neu}$ des Steuerparameters k2 gilt dann unter Berücksichtigung der bei optimalem Steuerverhalten erfüllten Gleichung (3):

$$k2_{Neu} = \frac{(p_{H1} + \Delta p) - (p_{H2} + \Delta p)}{\eta \cdot (p_{H1} - p_{H2})} \qquad (9)$$

Aus den Gleichungen (8) und (9) folgt dann die Adaptionsformel für die Adaption des Steuerparameters k2:

$$k2_{Neu} = k2_{Alt} \cdot \frac{p_{H1} - p_{H2}}{p_{V1} - p_{V2}} \qquad (10)$$

Im Folgenden wird nun die Herleitung der Adaptionsformel für den Steuerparameter k1 beschrieben. Aus den Gleichungen (1), (2) und (3) folgt:

$$k1 = \frac{p_V}{\eta} - k2 \cdot p_H \qquad (11)$$

Setzt man Gleichung (6) in Gleichung (11) ein, so erhält man für den alten, nicht optimierten Wert $k1_{Alt}$ des Steuerparameters k1 im Betriebspunkt 1 mit $p_{V1}$, $p_{H1}$ und $F_{m1}$:

$$k1_{Alt} = \frac{p_{V1}}{\eta} - \frac{p_{V1} - p_{V2}}{\eta \cdot (p_{H1} - p_{H2})} \cdot p_{H1} \qquad (12)$$

Für den neuen adaptierten Optimalwert $k1_{Neu}$ muss dagegen gelten:

$$k1_{Neu} = \frac{\Delta p_{Soll}}{\eta} \qquad (13)$$

Aus den Gleichungen (12) und (13) folgt dann schließlich die Adaptionsformel für die Adaption des Steuerparameters k1:

$$k1_{Neu} = k1_{Alt} \frac{\Delta p_{SOLL}}{p_{V1} - \frac{p_{V1} - p_{V2}}{p_{H1} - p_{H2}} \cdot p_{H1}} \qquad (13)$$

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

Bezugszeichenliste:

1    Zerstäuber
2    Dosierpumpe
3    Farbdruckregler
4    Farbleitung
5    Proportionalventil
6    Steuerluftleitung
7    Steuereinheit
8    Drucksensor
9    Adaptionseinheit
10   Drucksensor

**Patentansprüche**

**1.** Beschichtungsanlage zur Beschichtung von Bauteilen mit einem Beschichtungsmittel, insbesondere Lackieranlage zur Lackierung von Kraftfahrzeug-Karosserieteilen, mit

a) einer Dosierpumpe (2), die das Beschichtungsmittel mit einer bestimmten Fördermenge ($F_m$) dosiert, sowie mit
b) einem Druckregler (3), der stromaufwärts vor der Dosierpumpe (2) angeordnet ist und den Beschichtungsmitteldruck ($p_v$) am Eingang der Dosierpumpe (2) einstellt,
c) einem ersten Drucksensor (8), der den Beschichtungsmitteldruck ($p_H$) stromabwärts hinter der Dosierpumpe (2) misst,
d) einem zweiten Drucksensor (10), der den Beschichtungsmitteldruck ($p_v$) stromaufwärts vor der Dosierpumpe (2) misst,
**gekennzeichnet durch**
e) eine Steuereinheit (7), die den Druckregler (3) ansteuert und als Steuergröße die Druckdifferenz ($\Delta p$) über der Dosierpumpe (2) unabhängig von der Fördermenge der Dosierpumpe (2) auf einen im Wesentlichen konstanten Sollwert ($\Delta p_{Soll}$) einstellt, wobei die Steuereinheit (7) den Druckregler (3) in Abhängigkeit von dem stromabwärts hinter der Dosierpumpe (2) gemessenen Beschichtungsmitteldruck ($p_H$) entsprechend einem vorgegebenen Steuerverhalten ohne eine Rückkopplung der Druckdifferenz ($\Delta p$) ansteuert, so dass die Druckdifferenz ($\Delta p$) über der Dosierpumpe (2) den vorgegebenen Sollwert ($\Delta p_{Soll}$) annimmt, wobei die vorgegebene Druckdifferenz ($\Delta p$) über der Dosierpumpe (2) im Bereich zwischen 0,5 bar und 1,5 bar liegt,

f) eine Adaptionseinheit (9), die eingangsseitig mit den beiden Drucksensoren (8, 10) verbunden ist und das Steuerverhalten der Steuereinheit (7) in Abhängigkeit von dem Beschichtungsmitteldruck ($p_v$) stromaufwärts vor der Dosierpumpe (2) und von dem Beschichtungsmitteldruck stromabwärts hinter der Dosierpumpe (2) adaptiert.

2. Beschichtungsanlage nach Anspruch 1, **dadurch gekennzeichnet, dass** die Steuereinheit (7) den Druckregler (3) in Abhängigkeit von dem stromabwärts hinter der Dosierpumpe (2) gemessenen Beschichtungsmitteldruck ($p_H$) entsprechend einer im Wesentlichen linearen Steuerkennlinie ansteuert.

3. Beschichtungsanlage nach Anspruch 2, **dadurch gekennzeichnet, dass** die Steuerkennlinie einen vorgegebenen Achsenabschnittswert (k1) und eine vorgegebene Steigung (k2) aufweist, wobei der Achsenabschnittswert (k1) einem vorgegebenen Sollwert ($\Delta p_{Soll}$) der Druckdifferenz über dem Druckregler (3) entspricht.

4. Beschichtungsanlage nach einem der vorhergehenden Ansprüche, **dadurch gekennzeichnet,**

a) **dass** die Adaptionseinheit (9) das Steuerverhalten der Steuereinheit (7) iterativ und/oder rekursiv adaptiert, und/oder
b) **dass** die Adaptionseinheit (9) das Steuerverhalten der Steuereinheit (7) während des normalen Beschichtungsbetriebs adaptiert, und/oder
c) **dass** die Adaptionseinheit (9) das Steuerverhalten der Steuereinheit (7) laufend oder in bestimmten Zeitabständen adaptiert.

5. Beschichtungsanlage nach einem der vorhergehenden Ansprüche, **dadurch gekennzeichnet, dass** die Steuereinheit (7) den Druckregler (3) direkt ohne einen zwischengeschalteten Regelkreis direkt ansteuert.

6. Beschichtungsanlage nach einem der vorhergehenden Ansprüche, **dadurch gekennzeichnet, dass** die Druckdifferenz ein Toleranzfeld von +/- 1 bar aufweist.

7. Beschichtungsanlage nach einem der vorhergehenden Ansprüche, **dadurch gekennzeichnet, dass** die Steuereinheit (7) den Druckregler (3) über ein Proportionalventil (5) ansteuert, wobei die Steuereinheit (7) das Porportionalventil (5) elektrisch ansteuert, während das Proportionalventil (5) den Druckregler (3) pneumatisch ansteuert.

8. Beschichtungsanlage nach einem der vorhergehenden Ansprüche, **dadurch gekennzeichnet,**

a) **dass** die Dosierpumpe (2) ein Applikationsgerät (1) mit dem Beschichtungsmittel speist, und/oder
b) **dass** das Applikationsgerät (1) ein Rotationszerstäuber ist.

9. Betriebsverfahren für eine Beschichtungsanlage zur Beschichtung von Bauteilen mit einem Beschichtungsmittel, insbesondere für die Beschichtung von Kraftfahrzeug-Karosserieteilen, mit den folgenden Schritten:

a) Mengendosierung des Beschichtungsmittels mittels einer Dosierpumpe (2) entsprechend einer vorgegebenen Fördermenge ($F_m$),
b) Regelung des Beschichtungsmitteldrucks ($p_v$) stromaufwärts vor der Dosierpumpe (2) mittels eines Druckreglers (3),
c) Messung des Beschichtungsmitteldrucks ($p_H$) stromabwärts hinter der Dosierpumpe (2) mittels eines ersten Drucksensors (8),
d) Messung des Beschichtungsmitteldrucks ($p_v$) stromaufwärts vor der Dosierpumpe (2),
**gekennzeichnet durch** folgende Schritte:
e) Steuerung des über der Dosierpumpe (2) abfallenden Differenzdrucks ($\Delta p$) als Steuergröße auf einen vorgegebenen Sollwert ($\Delta p_{Soll}$) unabhängig von der Fördermenge ($F_m$) der Dosierpumpe (2) **durch** eine Ansteuerung des Druckreglers (3) entsprechend einem vorgegebenen Steuerverhalten in Abhängigkeit von dem stromabwärts hinter der Dosierpumpe (2) gemessenen Beschichtungsmitteldruck ($p_H$) ohne eine Rückkopplung der Druckdifferenz ($\Delta p$), wobei der Druckregler (3) so angesteuert wird, dass die Druckdifferenz ($\Delta p$) über dem Druckregler (3) unabhängig von der Fördermenge ($F_m$) im Wesentlichen konstant ist und im Bereich zwischen 0,5 bar und 1,5 bar liegt,

f) Adaption des Steuerverhaltens in Abhängigkeit von dem gemessenen Beschichtungsmitteldruck ($p_H$) hinter der Dosierpumpe (2) und dem gemessenen Beschichtungsmitteldruck ($p_V$) vor der Dosierpumpe (2).

**10.** Betriebsverfahren nach Anspruch 9,
**dadurch gekennzeichnet,**

a) **dass** der Druckregler (3) in Abhängigkeit von dem stromabwärts hinter der Dosierpumpe (2) gemessenen Beschichtungsmitteldruck ($p_H$) entsprechend einer im Wesentlichen linearen Steuerkennlinie angesteuert wird, und/oder

b) **dass** die Steuerkennlinie einen vorgegebenen Achsenabschnittswert ($k1$) und eine vorgegebene Steigung ($k2$) aufweist, wobei der Achsenabschnittswert ($k1$) der Steuerkennlinie entsprechend der gewünschten Druckdifferenz über dem Druckregler (3) festgelegt wird.

**11.** Betriebsverfahren nach einem der Ansprüche 9 bis 10, **dadurch gekennzeichnet, dass** das Steuerverhalten iterativ und/oder rekursiv adaptiert wird.

**12.** Betriebsverfahren nach einem der Ansprüche 9 bis 11,
**dadurch gekennzeichnet,**

a) **dass** das Steuerverhalten während des normalen Beschichtungsbetriebs adaptiert wird, und/oder

b) **dass** das Steuerverhalten laufend oder in bestimmten Zeitabständen adaptiert wird, und/oder

c) **dass** das Steuerverhalten nach einem Austausch des Druckreglers (3) und/oder nach einem Wechsel des Beschichtungsmittels adaptiert wird.

**13.** Betriebsverfahren nach einem der Ansprüche 9 bis 12, **dadurch gekennzeichnet, dass** das zur Adaption des Steuerverhaltens nur Fördermengenänderungen berücksichtigt werden, die eine bestimmte Mindestdauer aufweisen.

**14.** Betriebsverfahren nach einem der Ansprüche 9 bis 13, **gekennzeichnet durch** folgende Schritte:

a) Messung des Beschichtungsmitteldrucks ($p_{V1}$) vor der Dosierpumpe (2) und des Beschichtungsmitteldrucks ($p_{H1}$) hinter der Dosierpumpe (2) bei einer ersten Fördermenge ($F_{m1}$) der Dosierpumpe (2),

b) Messung des Beschichtungsmitteldrucks ($p_{V2}$) vor der Dosierpumpe (2) und des Beschichtungsmitteldrucks ($p_{H2}$) hinter der Dosierpumpe (2) bei einer zweiten Fördermenge ($F_{m2}$) der Dosierpumpe (2),

c) Adaption des Steuerverhaltens der Steuereinheit (7) anhand der bei den beiden Fördermengen ($F_{m1}$, $F_{m2}$) gemessenen Beschichtungsmitteldrücke ($P_{V1}$, $P_{H1}$, $P_{V2}$, $P_{H2}$) vor und hinter der Dosierpumpe (2).

**15.** Betriebsverfahren nach einem der Ansprüche 9 bis 14, **dadurch gekennzeichnet, dass** das Steuerverhalten ausschließlich den stromabwärts hinter der Dosierpumpe (2) gemessenen Beschichtungsmitteldruck ($p_H$) als variable Größe berücksichtigt.

**Claims**

**1.** Coating installation for the coating of components with a coating medium, in particular a painting installation for the painting of motor vehicle body parts, with

a) a metering pump (2), which meters the coating medium with a specific quantity conveyed ($F_m$), and also with

b) a pressure regulator (3) which is disposed upstream of the metering pump (2) and sets the coating medium pressure ($p_V$) at the input of the metering pump (2),

c) a first pressure sensor (8) which measures the coating medium pressure ($p_H$) downstream of the metering pump (2),

d) a second pressure sensor (10) which measures the coating medium pressure ($p_V$) upstream of the metering pump (2),

**characterised by**

e) a control unit (7) which controls the pressure regulator (3) and as control variable sets the pressure difference ($\Delta p$) across the metering pump (2), irrespective of the quantity conveyed by the metering pump (2), to a substantially constant desired value ($\Delta p_{Soll}$), wherein the control unit (7) controls the pressure regulator (3) as a function of the coating medium pressure ($p_H$) measured downstream of the metering pump (2) according to a predetermined control behaviour with feedback of the pressure difference ($\Delta p$), so that the pressure difference ($\Delta p$) across the metering pump (2) assumes the predetermined desired value ($\Delta p_{Soll}$), wherein the predetermined pressure difference ($\Delta p$) across the metering pump (2) in the range between 0.5 bars and 1.5 bars,

f) an adaptation unit (9) which is connected on the input side to the two pressure sensors (8, 10) and adapts the control behaviour of the control unit (7) as a function of the coating medium pressure ($p_V$) upstream of the metering pump and the coating medium pressure downstream of the metering pump (2).

2. Coating installation as claimed in Claim 1, **characterised in that** the control unit (7) controls the pressure regulator (3) as a function of the coating medium pressure ($p_H$) measured downstream of the metering pump (2) according to a substantially linear control characteristic.

3. Coating installation as claimed in Claim 2, **characterised in that** the control characteristic has a predetermined axis intercept value (k1) and a predetermined gradient (k2), wherein the axis intercept value (k1) corresponds to a predetermined desired value ($\Delta p_{Soll}$) of the pressure difference across the pressure regulator (3).

4. Coating installation as claimed in any one of the preceding claims, **characterised in that**

a) the adaptation unit (9) adapts the control behaviour of the control unit (7) iteratively and/or recursively, and/or
b) the adaptation unit (9) adapts the control behaviour of the control unit (7 during the normal coating operation, and/or
c) the adaptation unit (9) adapts the control behaviour of the control unit (7) during the normal coating operation.

5. Coating installation as claimed in any one of the preceding claims, **characterised in that** the control unit (7) controls the pressure regulator (3) directly without an interposed control circuit.

6. Coating installation as claimed in any one of the preceding claims, **characterised in that** the pressure difference has a tolerance range of +/- 1 bar.

7. Coating installation as claimed in any one of the preceding claims, **characterised in that** the control unit (7) controls the pressure regulator (3) via a proportional valve (5),
wherein the control unit (7) controls the proportional valve (5) electrically, whilst the proportional valve (5) controls the pressure regulator (3) pneumatically.

8. Coating installation as claimed in any one of the preceding claims, **characterised in that**

a) the metering pump (2) supplies an applicator device (1) with the coating medium, and/or
b) the applicator device (1) is a rotary atomiser.

9. Method of operation for a coating installation for the coating of components with a coating medium in particular for the coating of motor vehicle body parts, with the following steps:

a) metering of the quantity of the coating medium by means of a metering pump (2) according to a predetermined quantity conveyed ($F_m$),
b) regulation of the coating medium pressure ($p_V$) upstream of the metering pump (2) by means of a pressure regulator (3),
c) measurement of the coating medium pressure ($p_H$) downstream of the metering pump (2) by means of a first pressure sensor (8),
d) measurement of the coating medium pressure ($p_V$) upstream of the metering pump (2),
**characterised by** the following steps:
e) control of the differential pressure ($\Delta p$) dropping across the metering pump (2) as control variable to a predetermined desired value ($\Delta p_{Soll}$) irrespective of the quantity conveyed ($F_m$) by the metering pump (2) by control of the pressure regulator (3) according to a predetermined control behaviour as a function of the coating medium pressure ($p_H$) measured downstream of the metering pump without feedback of the pressure difference ($\Delta p$), wherein the pressure regulator (3) is controlled so that the pressure difference ($\Delta p$) across the pressure regulator (3) irrespective of the quantity conveyed ($F_m$) is substantially constant and lies in the range between 0.5 bars and 1.5 bars,
f) adaptation of the control behaviour as a function of the measure coating medium pressure ($p_H$) downstream of the metering pump (2) and the measured coating medium pressure ($p_V$) upstream of the metering pump (2).

10. Method of operation as claimed in Claim 9, **characterised in that**

   a) the pressure regulator (3) is controlled as a function of the coating medium pressure ($p_H$) measured downstream of the metering pump (2) according to a substantially linear control characteristic, and/or
   b) the control characteristic has a predetermined axis intercept value (k1) and a predetermined gradient (k2), wherein the axis intercept value (k1) of the control characteristic is fixed according to the desired pressure difference across the pressure regulator (3).

11. Method of operation as claimed in either Claim 9 or Claim 10, **characterised in that** the control behaviour is adapted iteratively and/or recursively.

12. Method of operation as claimed in any one of Claims 9 to 11, **characterised in that**

   a) the control behaviour is adapted during the normal coating operation, and/or
   b) the control behaviour is adapted continuously or at specific time intervals, and/or
   c) the control behaviour is adapted after replacement of the pressure regulator (3) and/or after a change of coating medium.

13. Method of operation as claimed in any one of Claims 9 to 12, **characterised in that** for adaptation of the control behaviour only changes to the quantity conveyed which have a specific minimum duration are taken into consideration.

14. Method of operation as claimed in any one of Claims 9 to 13, **characterised by** the following steps:

   a) measurement of the coating medium pressure ($p_{V1}$) upstream of the metering pump (2) and the coating medium pressure ($p_{H1}$) downstream of the metering pump (2) in the case of a first quantity conveyed ($F_{m1}$) by the metering pump (2),
   b) measurement of the coating medium pressure ($p_{V2}$) upstream of the metering pump (2) and the coating medium pressure ($p_{H2}$) downstream of the metering pump (2) in the case of a first quantity conveyed ($F_{m2}$) by the metering pump (2),
   c) adaptation of the control behaviour of the control unit (7) with the aid of the coating medium pressures ($p_{V1}$, $p_{H1}$, $p_{V2}$, $p_{H2}$) upstream and downstream of the metering pump (2) measured in the case of the two quantities conveyed ($F_{m1}$, $C_{m2}$).

15. Method of operation as claimed in any one of Claims 9 to 14, **characterised in that** the control behaviour takes account exclusively of the coating medium pressure ($p_H$) measured downstream of the metering pump (2) as variable.

**Revendications**

1. Installation d'enduction pour enduire des pièces avec un produit de revêtement, en particulier une installation de peinture pour peindre des pièces de carrosserie pour véhicules automobiles, avec

   a) une pompe de dosage (2) qui dose le produit de revêtement à un certain débit de refoulement ($F_m$), et avec
   b) un régulateur de pression (3) qui est disposé en amont avant la pompe de dosage (2) et règle la pression de produit de revêtement ($p_V$) à l'entrée de la pompe de dosage (2),
   c) un premier capteur de pression (8) qui mesure la pression de produit de revêtement ($p_H$) en aval après la pompe de dosage (2),
   d) un deuxième capteur de pression (10) qui mesure la pression de produit de revêtement ($p_V$) en amont avant la pompe de dosage (2),
   **caractérisée par**
   e) une unité de commande (7) qui pilote le régulateur de pression (3) et règle comme grandeur commandée la différence de pression ($\Delta p$) au niveau de la pompe de dosage (2) indépendamment du débit de refoulement de la pompe de dosage (2) sur une valeur de consigne ($\Delta p_{Soll}$) substantiellement constante, dans laquelle l'unité de commande (7) pilote le régulateur de pression (3) en fonction de la pression de produit de revêtement ($p_H$) mesurée en aval après la pompe de dosage (2) selon un comportement de commande prédéfini sans réinjection de la différence de pression ($\Delta p$), de sorte que la différence de pression ($\Delta p$) au niveau de la pompe de dosage (2) adopte la valeur de consigne ($\Delta p_{Soll}$) prédéfinie, dans laquelle la différence de pression ($\Delta p$) prédéfinie au niveau de la pompe de dosage (2) se situe dans la plage entre 0,5 bar et 1,5 bar,

f) une unité d'adaptation (9) qui est reliée en entrée aux deux capteurs de pression (8, 10) et adapte le comportement de commande de l'unité de commande (7) en fonction de la pression de produit de revêtement ($p_V$) en amont avant la pompe de dosage (2) et de la pression de produit de revêtement en aval après la pompe de dosage (2).

2. Installation d'enduction selon la revendication 1, **caractérisée en ce que** l'unité de commande (7) pilote le régulateur de pression (3) en fonction de la pression moyenne du produit de revêtement ($p_H$) mesurée en aval après la pompe de dosage (2) selon une courbe caractéristique de commande substantiellement linéaire.

3. Installation d'enduction selon la revendication 2, **caractérisée en ce que** la courbe caractéristique de commande présente une valeur de section de coordonnée (k1) et une pente prédéfinie (k2), dans laquelle la valeur de section de coordonnée (k1) correspond à une valeur de consigne ($\Delta p_{Soll}$) prédéfinie de la différence de pression au niveau du régulateur de pression (3).

4. Installation d'enduction selon l'une quelconque des revendications précédentes, **caractérisée en ce que**

   a) l'unité d'adaptation (9) adapte le comportement de commande de l'unité de commande (7) de façon itérative et/ou récursive, et/ou
   b) l'unité d'adaptation (9) adapte le comportement de commande de l'unité de commande (7) pendant le fonctionnement d'enduction ordinaire, et/ou
   c) l'unité d'adaptation (9) adapte le comportement de commande de l'unité de commande (7) en continu ou à intervalles définis.

5. Installation d'enduction selon l'une quelconque des revendications précédentes, **caractérisée en ce que** l'unité de commande (7) pilote directement le régulateur de pression (3) sans boucle d'asservissement interposée.

6. Installation d'enduction selon l'une quelconque des revendications précédentes, **caractérisée en ce que** la différence de pression présente une zone de tolérance de +/- 1 bar.

7. Installation d'enduction selon l'une quelconque des revendications précédentes, **caractérisée en ce que** l'unité de commande (7) pilote le régulateur de pression (3) par l'intermédiaire d'une vanne proportionnelle (5), dans laquelle l'unité de commande (7) pilote la vanne proportionnelle (5) de façon électrique alors que la vanne proportionnelle (5) pilote le régulateur de pression (3) de façon pneumatique.

8. Installation d'enduction selon l'une quelconque des revendications précédentes, **caractérisée en ce que**

   a) la pompe de dosage (2) alimente un appareil d'application (1) en produit de revêtement, et/ou
   b) l'appareil d'application (1) est un pulvérisateur rotatif.

9. Procédé d'exploitation pour une installation d'enduction pour enduire des pièces avec un produit de revêtement, en particulier pour enduire des pièces de carrosserie pour véhicules automobiles, comprenant les étapes suivantes consistant à :

   a) doser le débit du produit de revêtement au moyen d'une pompe de dosage (2) selon un débit de refoulement prédéfini ($F_m$),
   b) réguler la pression de produit de revêtement ($p_V$) en amont avant la pompe de dosage (2) au moyen d'un régulateur de pression (3),
   c) mesurer la pression de produit de revêtement ($p_H$) en aval après la pompe de dosage (2) au moyen d'un premier capteur de pression (8),
   d) mesurer la pression de produit de revêtement ($p_V$) en amont avant la pompe de dosage (2),
   **caractérisé par** les étapes suivantes consistant à :
   e) commander la différence de pression ($\Delta p$) diminuant au niveau de la pompe de dosage (2) comme une grandeur commandée vers une valeur de consigne ($\Delta p_{Soll}$) prédéfinie indépendamment du débit de refoulement ($F_m$) de la pompe de dosage (2) par un pilotage du régulateur de pression (3) selon un comportement de commande prédéfini en fonction de la pression de produit de revêtement ($p_H$) mesurée en aval après la pompe de dosage (2) sans réinjection de la différence de pression ($\Delta p$), dans lequel le régulateur de pression (3) est piloté de telle sorte que la différence de pression ($\Delta p$) au niveau du régulateur de pression (3) est substantiellement constante indépendamment du débit de refoulement ($F_m$) et se situe dans la plage entre 0,5 bar et 1,5 bar,

f) adapter le comportement de commande en fonction de la pression de produit de revêtement ($p_H$) mesurée après la pompe de dosage (2) et de la pression de produit de revêtement ($p_V$) avant la pompe de dosage (2).

**10.** Procédé d'exploitation selon la revendication 9,
**caractérisé en ce que**

a) le régulateur de pression (3) est piloté en fonction de la pression de produit de revêtement ($p_H$) mesurée en aval après la pompe de dosage (2) selon une courbe caractéristique de commande substantiellement linéaire, et/ou

b) la courbe caractéristique de commande présente une valeur de section de coordonnée prédéfinie (k1) et une pente prédéfinie (k2), dans lequel la valeur de section de coordonnée (k1) de la courbe caractéristique de commande est fixée selon la différence de pression souhaitée au niveau du régulateur de pression (3).

**11.** Procédé d'exploitation selon l'une quelconque des revendications 9 à 10, **caractérisé en ce que** le comportement de commande est adapté de façon itérative et/ou récursive.

**12.** Procédé d'exploitation selon l'une quelconque des revendications 9 à 11, **caractérisé en ce que**

a) le comportement de commande est adapté pendant le fonctionnement d'enduction ordinaire, et/ou

b) le comportement de commande est adapté en continu ou à intervalles définis, et/ou

c) le comportement de commande est adapté après un remplacement du régulateur de pression (3) et/ou après un changement du produit de revêtement.

**13.** Procédé d'exploitation selon l'une quelconque des revendications 9 à 12, **caractérisé en ce que** pour l'adaptation du comportement de commande, seuls sont pris en compte les changements de débit de refoulement qui présentent une certaine durée minimale.

**14.** Procédé d'exploitation selon l'une quelconque des revendications 9 à 13, **caractérisé par** les étapes suivantes consistant à :

a) mesurer la pression de produit de revêtement ($p_{V1}$) avant la pompe de dosage (2) et la pression de produit de revêtement ($p_{H1}$) après la pompe de dosage (2) pour un premier débit de refoulement ($F_{m1}$) de la pompe de dosage (2),

b) mesurer la pression de produit de revêtement ($p_{V2}$) avant la pompe de dosage (2) et la pression de produit de revêtement ($p_{H2}$) après la pompe de dosage (2) à un deuxième débit de refoulement ($F_{m2}$) de la pompe de dosage (2),

c) adapter le comportement de commande de l'unité de commande (7) au moyen des pressions de produit de revêtement ($p_{V1}$, $p_{H1}$, $p_{V2}$, $p_{H2}$) mesurées pour les deux débits de refoulement ($F_{m1}$, $F_{m2}$) avant et après la pompe de dosage (2).

**15.** Procédé d'exploitation selon l'une quelconque des revendications 9 à 14, **caractérisé en ce que** le comportement de commande prend en compte comme une grandeur variable exclusivement la pression de produit de revêtement ($p_H$) mesurée en aval après la pompe de dosage (2).

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1287900 A2
- DE 69814532 T2
- WO 2005072881 A1
- US 3584977 A
- EP 0697317 B1
- EP 1437520 A2
- JP 63111963 A
- JP 09029147 A
- EP 1376289 A1

**In der Beschreibung aufgeführte Nicht-Patentliteratur**

- *Technisches Handbuch Farbmengenregelung,* 1994, 32